# EUROPÄISCHE PATENTANMELDUNG

(11) **EP 0 612 989 A1**
(43) Veröffentlichungstag der Anmeldung: **31.08.1994**
(21) Anmeldenummer: 94102379.8
(22) Anmeldetag: 17.02.1994
(51) Int. Cl.: G01K 15/00

(54) **Anordnung zur Funktionskontrolle eines Temperatursensors**

(30) Priorität: 20.02.1993 DE 4305314
(71) Anmelder: VDO Adolf Schindling AG, D-60326 Frankfurt/Main (DE)
(72) Erfinder: Fichter, Manfred, D-78126 Königsfeld (DE); Merkle, Reinhard, Dipl.-Ing., D-78166 Donaueschingen (DE)

(57) **Zusammenfassung**

In Kühlfahrzeugen und Lagerräumen ist es erforderlich, daß die Temperaturen innerhalb relativ enger Grenzen eingehalten werden. Dementsprechend sind die eingesetzten Temperatursensoren auf ihre ordnungsgemäße Funktion zu überwachen. Diese Überwachung muß jederzeit und bei jeder beliebigen Temperatur durch Fernabfrage des betreffenden Temperatursensors möglich sein, wobei die Plausibilität der Funktionskontrolle im vorliegenden Falle derart festgelegt ist, daß der Bauelementeaufwand und die Temperaturabhängigkeit der Funktionskontrollanordnung gering sind.

Im einzelnen sind in Reihe mit einem Meßelement (14) und einem parallel angeordneten Prüfwiderstand (27) Halbleiterschalter (22, 28) vorgesehen, welche von außen über eine Steuerleitung (21) umschaltbar sind. Die Funktionskontrolle des Temperatursensors (1) erfolgt in diesem Falle durch Messen lediglich einer durch den Prüfwiderstand (27) bestimmten Frequenz.

## Beschreibung

Die Erfindung betrifft eine Anordnung zur Funktionskontrolle eines Temperatursensors, in welchem ein temperaturabhängig veränderlicher Widerstand als Meßelement und eine elektronische Schaltung zur Signalaufbereitung und Frequenzwandlung vorgesehen sind.

Bekanntlich ist es aus wirtschaftlichen aber auch aus gesundheitlichen Gründen zwingend erforderlich, die empfohlenen Temperaturen gekühlter oder tiefgefrorener Lebensmittel über den gesamten Verteilerweg von der Produktion über Zwischenlager bis zum Verbraucher in relativ engen Grenzen einzuhalten. Für den verantwortungsvollen Transportunternehmer und Lagerbetreiber ist es daher von besonderem Interesse, die Einhaltung der Kühlkette dokumentieren und im Falle von Schäden dem Versicherer gegenüber einen Nachweis liefern zu können, daß mangelnde Sorgfalt bzw. absichtliches Nichteinstellen der für den betreffenden Transport erforderlichen Temperatur oder Manipulationen am Kühlaggregat als Schadensursache ausscheiden.

Das heißt, es ist erforderlich, die Lagertemperaturen, insbesondere aber die Transporttemperaturen nicht nur zu messen, sondern auch lückenlos aufzuzeichnen, wobei die geforderte Plausibilität der Aufzeichnungen von einer neutralen Stelle, beispielweise der Eichbehörde, nachprüfbar sein muß. Mit anderen Worten, die für die Temperaturerfassung vorgesehenen Geräte bzw. Geräteeinheiten müssen mit Mitteln ausgerüstet sein, die es gestatten, durch stichprobenweises oder automatisches Überprüfen Funktionsfehler zu erkennen oder die ordnungsgemäße Funktion zu bestätigen, um im letzteren Falle zusammen mit einem Ausdruck oder einer Anzeige den Nachweis erbringen zu können, daß nicht ein Defekt oder Alterung vorliegt, sondern das Kühlaggregat nicht auf die erforderliche Kühlleistung eingestellt war und dies ggf. absichtlich erfolgte, um Kraftstoff zu sparen.

Der Einfachheit halber kann eine derartige Funktionsprüfung vorgenommen werden, wenn ausschließlich der Temperatursensor eines aus dem Temperatursensor einer Registriereinheit und einem Anzeige- und/oder Ausgabegerät bestehenden Temperaturerfassungssystems überprüft wird. Außerdem sind die Temperatursensoren, von denen, um die Raumtemperatur beispielsweise eines Kühlfahrzeugs in verschiedenen Zonen des Kühlraumes erfassen zu können, mehrere vorgesehen sein müssen, die im System funktionskritischsten Elemente. Die Anordnung der Temperatursensoren an vielfach schwer zugänglichen und durch das Ladegut versperrten Stellen im Kühlfahrzeug und die Tatsache, daß die elektrischen Ein- und Ausgänge der Temperatursensoren zweckmäßigerweise hermetisch abgedichtet sein sollten, erfordern eine Fernabfrage der Temperatursensoren mit dem Vorzug, daß sämtliche Temperatursensoren von einer Steuereinheit, vorzugsweise von der Registriereinheit des betreffenden Temperaturerfassungssystems, abfragbar sind.

Der vorliegenden Erfindung war somit die Aufgabe gestellt, einen Temperatursensor mit möglichst geringem Aufwand derart auszurüsten, daß seine Funktion auch durch Fernabfrage zuverlässig überprüfbar ist.

Die Lösung der Aufgabe beschreibt der Patentanspruch 1. Bevorzugte Ausführungsvarianten stellen die Unteransprüche dar.

Der besondere Vorzug der Erfindung ist darin zu sehen, daß der Temperatursensor auf eine sehr einfache Weise unter Verwendung einer im Temperatursensor vorgesehenen Zusatzbeschaltung überprüft werden kann. Ferner ist die Funktionsprüfung jederzeit und bei jeder üblichen Betriebstemperatur durchführbar oder kann programmgesteuert erfolgen. Dabei ist es ausreichend, eine bestimmte festgelegte Frequenz zu messen, um sicherzustellen, daß die alterungsempfindlichen und somit driftanfälligen Schaltungsteile des Temperatursensors und auch die für die Funktionsprüfung vorgesehene Zusatzbeschaltung innerhalb festgesetzter Toleranzgrenzen noch den ursprünglich vorgenommenen Abgleichwerten entsprechen. Diese Lösung geht davon aus, daß die Genauigkeit und Meßwertkonstanz des als Meßelement dienenden Platinwiderstandes im allgemeinen nicht in Frage gestellt werden muß, zumal in dem vorgesehenen Anwendungsfalle die zu messenden Temperaturen nur einen Bruchteil des für einen solchen Widerstand zulässigen Temperaturbereichs in Anspruch nehmen. Das heißt, es ist für die vorgesehene Prüfmethode, bei der lediglich die Meßwertverarbeitung überprüft wird, auch nur ein verhältnismäßig geringer zusätzlicher Bauteileaufwand erforderlich. Die verwendeten Halbleiterschalter vermeiden Verschleiß und Kontaktprobleme und bieten, insbesondere im Hinblick auf das rauhe Einsatzmilieu, eine zuverlässige Schaltfunktion. Der Temperaturgang der Halbleiterschalter ist aufgrund des niedrigen Durchgangswiderstandes gering, so daß die Zusatzbeschaltung ebenfalls dazu beiträgt, daß relativ enge Toleranzen für die Funktionsprüfung festgesetzt werden können. Außerdem benötigt die vorgesehene Funktionsprüfung lediglich eine zusätzliche Leitung.

Erwähnenswert ist ferner, daß die Festlegung enger Toleranzen für die ordnungsgemäße Funktion des Temperatursensors im wesentlichen durch die bei der Herstellung der Hybridschaltung erzielbare Genauigkeit ermöglicht wird. Bekanntlich gewährleistet die Hybridschaltungstechnik eine zuverlässige Temperaturkonstanz und hohe Driftsicherheit, weil die für die Schaltungsqualität bestimmenden Widerstände mit einheitlichen Temperaturdehnungskoeffizienten herstellbar sind und mit dem vorgesehenen Laserabgleich Veränderungen beispielsweise der Ausgangsfrequenz durch nachfolgende Bearbeitungsschritte des Hybridschaltkreises, z.B. durch Tauchlackieren im voraus berücksichtigt werden können.

Vorteilhaft ist ferner, daß das vorgesehene Gehäuse des Temperatursensors, das verschraubungsfrei zusammengefügt ist, infolge seiner flachen Bauform beim Be- und Entladen eines Kühlfahrzeuges weniger stoßgefährdet ist. Durch die wandparallel ausgebildeten Anschlußkontakte und die Ausbildung eines für Flachstecker geeigneten Steckersockels ist der Temperatursensor außerdem in besonderer Weise installationsfreundlich und leicht leicht austauschbar.

Im folgenden sei die Erfindung anhand der beigefügten Zeichnungen näher erläutert. Es zeigen:
Fig. 1 eine Seitenansicht eines Ausführungsbeispiels des Temperatursensors,
Fig. 2 eine Draufsicht des Temperatursensors gemäß Fig. 1,
Fig. 3 ein Blockschaltbild des Temperatursensors,
Fig. 4 ein Ausführungsbeispiel der Zusatzbeschaltung des Temperatursensors,
Fig. 5 ein f/δ -Diagramm.

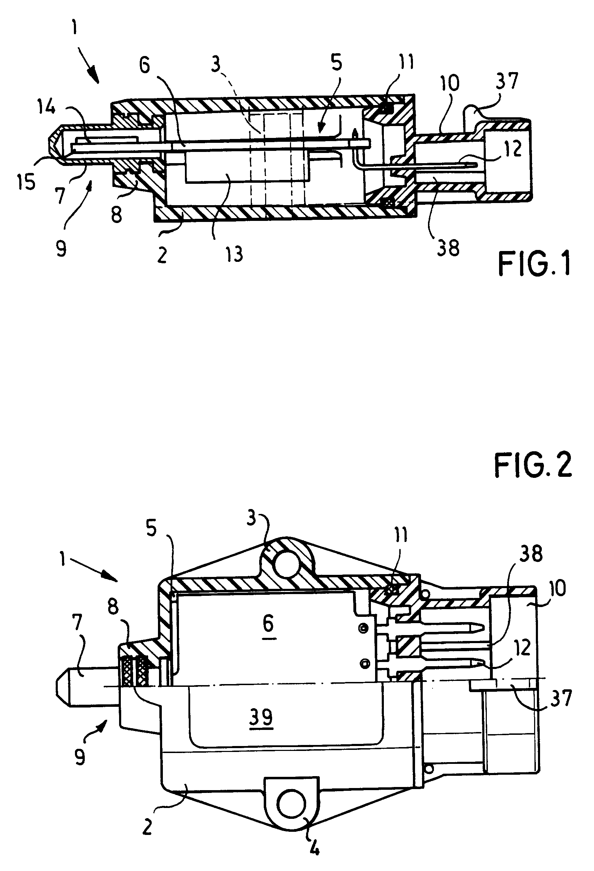

Das mit den Figuren 1 und 2 dargestellte Ausführungsbeispiel eines Temperatursensors 1 sieht ein taschenförmiges flaches Gehäuse 2 vor, an welchem Augen 3 und 4 zur Befestigung des Temperatursensors 1 an einer Fahrzeugwand angeformt sind. In dem vorzugsweise aus Kunststoff hergestellten Gehäuse 2 sind Führungen 5 für die Halterung einer Leiterplatte 6 ausgebildet und eine metallische Kapsel 7 eingebettet. Sie bildet zusammen mit einem Gehäuseansatz 8 den eigentlichen Meßkopf 9 des Temperatursensors 1. Die Öffnung des taschenförmigen Gehäuses 2 ist mit einer Steckerfassung 10 unter Verwendung eines O-Ringes 11 dicht verschlossen. Mehrere Kontaktzungen, von denen eine mit 12 bezeichnet ist, sind in die Steckerfassung 10 eingebettet und mit der Leiterplatte 6 kontaktiert. Auf der Leiterplatte 6 ist eine Hybridschaltung 13 beispielsweise durch Kleben befestigt. Von einer ebenfalls auf der Leiterplatte 6 kontaktierten Zusatzbeschaltung ist lediglich das eigentliche Meßelement beispielsweise ein Platinwiderstand dargestellt und mit 14 bezeichnet. Dabei ragt eine das Meßelement 14 tragende an der Leiterplatte 6 ausgebildete Zunge 15 in die Kapsel 7 hinein. Zur besseren Wärmeleitung und gleichzeitigen Abschirmung des Meßelementes 14 gegen den übrigen Innenraum des Temperatursensors 1 kann die Kapsel 7 mit Wärmeleitpaste ausgefüllt sein.

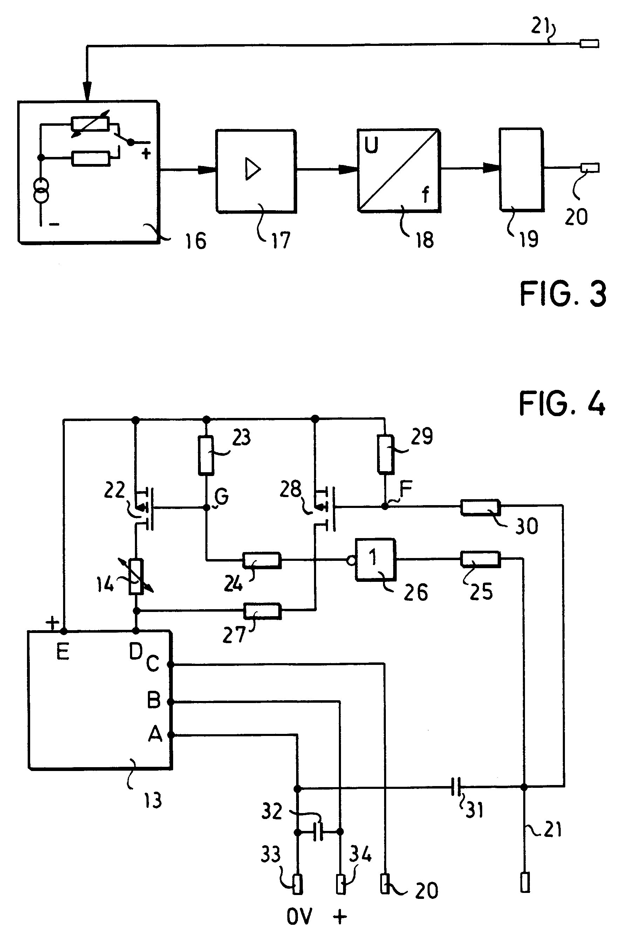

Wie aus dem Blockschaltbild Fig. 3 hervorgeht, umfaßt der Meßwertgeber 16 des Temperatursensors 1 im wesentlichen das Meßelement 14, einen Konstantstromgeber, einen Spannungsfolger sowie Widerstände zum Abgleich der Kennlinie des Temperatursensors 1. Außerdem sind Vorkehrungen für die Funktionskontrolle des Temperatursensors 1 dem Meßwertgeber 16 zugeordnet. Die Darstellung eines Konstantstromgebers, des Meßelementes, eines Prüfwiderstandes und eines Umschalters innerhalb der Blockdarstellung des Meßwertgebers 16 soll lediglich Symbolcharakter haben. Die Signale des Meßwertgebers 16, d.h. die Temperatursignale und diejenigen der Funktionskontrolle, werden in einem Verstärker 17 verstärkt in einem Spannungsfrequenzwandler 18 in Frequenzen umgeformt und stehen unter Zwischenschaltung einer geeigneten Ausgangsstufe 19 am Ausgang 20 des Temperatursensors 1 an. Mit 21 ist eine Steuerleitung bezeichnet, über welche die Funktionsprüfung des Temperatursensors 1 auslösbar ist. Mit der Fig. 4 ist im wesentlichen ein Ausführungsbeispiel der Zusatzbeschaltung der Hybridschaltung 13 dargestellt. Dabei befindet sich in dem von der in der Hybridschaltung 13 realisierten Konstantstromquelle gesteuerten Strompfad, in dem das Meßelement 14 liegt, ein Halbleiterschalter 22, welcher über einen aus den Widerständen 23, 24 und 25 gebildeten Spannungsteiler und einen in Reihe liegender Schaltungsteil 26 mit Inverterfunktion steuerbar ist.

Parallel zum Meßelement 14 und dem Halbleiterschalter 22 sind ein Prüfwiderstand 27 und ein weiterer Halbleiterschalter 28 angeordnet. Letzterer ist ebenfalls über einen Spannungsteiler, gebildet aus den Widerständen 29 und 30 steuerbar. Für den Anwendungsfall in einem Temperatursensor ist es von besonderer Bedeutung, daß die im allgemeinen temperaturabhängigen Durchgangswiderstände der zur Anwendung kommenden Halbleiterschalter 22 und 28 so niederohmig wie möglich sind, um einerseits die Meßgenauigkeit des Meßelementes 14 nicht zu beeinträchtigen, andererseits relativ enge Toleranzgrenzen bezüglich der Funktionsprüfung festsetzen zu können. Mit anderen Worten, die Meßwert- bzw. Prüfwertänderungen aufgrund der Temperaturabhängigkeit der Durchgangswiderstände der Halbleiterschalter 22 und 28 müssen vernachlässigbar sein, so daß für diesen Zweck sog. P-Kanal MOS-FETs vorgesehen sind.

Mit 31 und 32 sind dem Störschutz dienende Kondensatoren bezeichnet, die zwischen den Spannungsversorgungseingängen 33 (0 Volt) und 34 beispielsweise + 6 - 10 Volt sowie zwischen der Steuerleitung 21 für die Funktionsprüfung und dem 0-Volt-Eingang 33 verknüpft sind. Die Kontaktstellen A, B, C, D, E stellen die elektrischen Verknüpfungen der Hybridschaltung 13 mit der auf der Leiterplatte 6 befindlichen Zusatzbeschaltung dar. Dabei steht an der Kontaktstelle E gegenüber der Kontaktstelle D eine stabilisierte Spannung von beispielsweise + 5 Volt an.

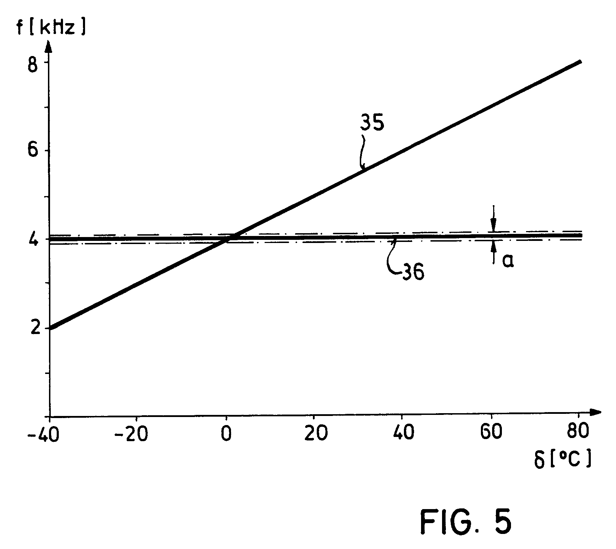

Im meßbereiten Zustand des Temperatursensors 1 ist der Halbleiterschalter 22 geschlossen. Am Ausgang 20 ist eine der momentan herrschenden Temperatur entsprechende Frequenz abgreifbar. Diese ändert sich bei Änderung der Temperatur, wie die Kennlinie 35 in Fig. 5 zeigt, proportional.

Soll nun eine Funktionsprüfung des Temperatursensors 1 vorgenommen werden, so wird die Steuerleitung 21 auf 0 Volt gelegt. Die dadurch erfolgende Spannungsabsenkung am Punkt F bewirkt ein Schließen des Halbleiterschalters 28. Gleichzeitig bewirkt der invertierende Schaltungsteil 26 eine Spannungserhöhung am Punkt G, was ein Öffnen des Halbleiterschalters 22 zur Folge hat. In diesem Betriebszustand des Temperatursensors 1 bestimmt der temperaturkonstante Prüfwiderstand 27 die Ausgangsfrequenz von z.B. 4 kHz (Kennlinie 36 in Fig. 5), die gemessen wird und die innerhalb eines in dem vorgesehenen Anwendungsfall relativ engen Toleranzbereichs von beispielsweise a = ± 100 Hz den betreffenden Temperatursensor 1 als noch ordnungsgemäß funktionierend ausweist. Liegt die gemessene Frequenz außerhalb des Toleranzbereichs, so wird mit einem geeigneten Signal angezeigt, daß der betreffende Temperatursensor auszutauschen ist.

Die Funktionsprüfung wird vorzugsweise programmgesteuert durch das Meß- und Registriergerät, beispielsweise im Stunden- oder Tagesrhythmus vorgenommen, sie kann aber auch stichprobenweise mit einem externen Frequenzmeßgerät durch einen Kontrollbeamten der Eichbehörde oder bei Grenzübertritten vorgenommen werden.

Der Vollständigkeit halber sei noch erwähnt, daß die Schaltungsaufteilung in eine Hybridschaltung und eine Zusatzbeschaltung den Vorteil bietet für die Fälle, bei denen eine Überprüfbarkeit der Funktion nicht erforderlich ist, durch Weglassen der Zusatzbeschaltung einen kostengünstigen Temperatursensor anbieten zu können.

Außerdem sei noch erwähnt, daß ein dem Steckersockel 10 zuzuordnender Flachstecker vorzugsweise derart ausgebildet sein sollte, daß er den Kontaktraum des Steckersockels 10 nach außen abdichtet. Mit 37 ist eine am Steckersockel 10 angeformte Nase bezeichnet, die im Zusammenwirken mit einem geeigneten, an dem Flachstecker angeformten Riegel der Arretierung des Flachsteckers dient, während ein am Steckersockel 10 ausgebildeter Steg 38 im Zusammenwirken mit einer an dem Flachstecker vorgesehenen Nut die Steckverbindung vertauschungssicher macht. Mit 39 ist ein Typenschild des Temperatursensors 1 bezeichnet.

## Patentansprüche

1. Anordnung zur Funktionskontrolle eines Temperatursensors, in welchem ein temperaturabhängig veränderlicher Widerstand als Meßelement und eine elektronische Schaltung zur Signalaufbereitung und Frequenzwandlung vorgesehen sind,
dadurch gekennzeichnet,
daß parallel zu dem Meßelement (14) ein
temperaturkonstanter Prüfwiderstand (27) angeordnet ist, daß im Strompfad des Meßelementes (14) und im Strompfad des Prüfwiderstandes (27) ein Halbleiterschalter (22 und 28) vorgesehen ist,
daß an dem Temperatursensor (1) ein zusätzlicher Eingang vorgesehen ist,
daß die Halbleiterschalter (22, 28) über eine Steuerleitung (21) und Mittel zur Spannungswandlung durch Potentialänderung an dem zusätzlichen Eingang wechselweise schaltbar sind und
daß im Kontrollzustand am Meßwertausgang (20) des Temperatursensors (1) eine dem Prüfwiderstand (27) entsprechende Frequenz abgreifbar ist.

2. Anordnung nach Anspruch 1,
dadurch gekennzeichnet,
daß als Halbleiterschalter (22, 28) P-Kanal MOS-FETs Anwendung finden und
daß für die Ansteuerung der Halbleiterschalter (22, 28) Spannungsteiler vorgesehen sind, wovon einem ein Schaltungsteil (26) mit Invertierfunktion zugeordnet ist.

3. Anordnung nach Anspruch 1,
dadurch gekennzeichnet,
daß die Mittel zur Signalaufbereitung und Frequenzwandlung (16, 17, 18, 19) des Temperatursensors (1) als Hybridschaltung (13) ausgebildet sind und daß die Mittel zur Funktionskontrolle (21 bis 30) in Form einer Zusatzbeschaltung unmittelbar auf einer die Hybridschaltung (13) tragenden Leiterplatte (6) kontaktiert sind.

4. Anordnung nach Anspruch 1,
dadurch gekennzeichnet,
daß das Gehäuse des Temperatursensors (1) zweiteilig ausgebildet ist, wobei der eine Teil (2), in welchen eine wärmeleitende Kapsel (7) eingebettet ist, taschenförmig geformt und der andere Teil (10) als vierpoliger Stecker derart ausgebildet ist, daß beim Zusammenfügen und Verkleben der beiden Gehäuseteile (2, 10) ein hermetisch dichtes Gehäuse bildbar ist.
